# FASCICULE DE BREVET EUROPEEN

(11) **EP 4 537 420 B1**
(45) Date de publication et mention de la délivrance du brevet: **04.06.2025**
(21) Numéro de dépôt: 24740210.0
(22) Date de dépôt: 21.06.2024
(51) Int. Cl.: H01M 50/538, H01M 10/04, H01M 10/052, H01M 50/533, H01M 10/0587

(54) **CELLULE POUR BATTERIE ÉLECTRIQUE ET SON PROCÉDÉ DE FABRICATION**
ZELLE FÜR EINE ELEKTRISCHE BATTERIE UND VERFAHREN ZUR HERSTELLUNG DAVON
CELL FOR AN ELECTRIC BATTERY AND METHOD FOR MANUFACTURING SAME

(30) Priorité: 21.06.2023 FR 2306398
(43) Date de publication de la demande: 16.04.2025
(73) Titulaire: Verkor, 38000 Grenoble (FR)
(72) Inventeur: CHALUMEAU, Adrien, 38000 Grenoble (FR); MILLE, Christophe, 38000 Grenoble (FR); DELOBEL, Bruno, 38000 Grenoble (FR); ACOSTA LAISEQUILLA, Rafael, 38000 Grenoble (FR)
(74) Mandataire: Novagraaf Group
(86) Numéro de dépôt international: PCT/IB2024/056094
(87) Numéro de publication internationale: WO 2024/261726

(56) Documents cités:
- EP-A1- 4 293 802
- WO-A1-2022/196938
- WO-A1-2023/068886
- US-A1- 2023 268 620

## Description

### Domaine technique de l'invention

L'invention concerne le domaine des batteries électriques pour véhicule automobile électrique. En particulier l'invention concerne des cellules de batteries électriques. De façon plus précise, l'invention a trait à des cellules de type cylindrique.

### Arrière-plan technique

Les cellules de batteries électriques de types cylindriques sont de plus en plus utilisées dans l'industrie automobile.

L'intérêt des cellules cylindriques réside dans leur capacité à emmagasiner une importante quantité d'énergie dans un volume réduit. Elles occupent ainsi un espace moins important dans le véhicule automobile pour une capacité d'emmagasinement d'énergie donnée.

La capacité d'emmagasinement d'énergie d'une cellule cylindrique est fonction de son diamètre. Ainsi plus le diamètre d'une cellule cylindrique est important, plus sa capacité à emmagasiner de l'énergie est importante.

Les cellules cylindriques sont fabriquées par enroulement autour d'un mandrin, d'un empilement successif d'au moins :
- une feuille d'électrode positive,
- une feuille de séparateur isolant,
- une feuille d'électrode négative,
- une feuille de séparateur isolant.

Le long des feuilles d'électrode, des languettes de collecte de courant sont rapportées et fixées auxdites feuilles d'électrode positive et négative. Ces languettes de collecte de courant permettent d'acheminer les électrons et ce faisant d'acheminer un courant électrique. Bien qu'automatisée, cette opération ralentit la cadence de production des cellules dites cylindriques. De plus, un défaut de fixation et/ou de contact entre les languettes et les électrodes peuvent réduire la performance des cellules cylindriques, voire provoquer des courts-circuits.

Afin de pallier ces problématiques, des industriels ont proposé de s'affranchir de languettes rapportées puis fixées aux électrodes.

L'une de ces solutions, consiste à effectuer des découpes directement sur les feuilles d'électrodes non revêtues de matériau actif pour former des languettes de collecte de courant avant l'enroulage autour d'un mandrin rotatif. Une fois l'enroulement terminé, ces languettes sont pliées et mise en contact avec un collecteur de courant rapporté.

Il est cité à titre d'exemple les documents WO2022/196938 et WO2023/068886.

Un inconvénient de cette méthode réside dans la difficulté de plier les languettes en raison, entre autres, de leur nombre important. De plus la fixation des languettes en position pliée est fastidieuse et rencontre des difficultés techniques, lorsqu'il est question d'atteindre des cadences industrielles.

En s'affranchissant de languettes rapportées, il convient de s'assurer que les découpes effectuées sur les feuilles d'électrodes permettent d'obtenir une architecture donnée avec quasi-certitude, sans quoi, l'industriel s'expose à la production de rebus et donc grève les performances de sa ligne de production.

Ainsi un inconvénient de la découpe des feuilles d'électrodes est qu'il est particulièrement difficile d'obtenir des rangées où les languettes sont alignées avec quasi-certitude. Lorsque les languettes ne sont pas alignées dans une rangée de languettes, cela est susceptible de réduire les performances de la cellule.

L'invention vise donc à résoudre les problèmes précités.

### Résumé de l'invention

A cet effet, il est proposé en premier lieu une cellule de batterie électrique pour véhicule à propulsion électrique, ladite cellule comprenant au moins un empilement successif d'une feuille :
- d'une première électrode positive comprenant un bord supérieur,
- d'un premier séparateur isolant,
- d'une deuxième électrode négative comprenant un bord inférieur,
- d'un deuxième séparateur isolant,
   ledit au moins un empilement étant enroulé sur lui-même autour d'un axe central de sorte à former un cylindre, ladite première électrode et ladite deuxième électrode comprennent chacune au moins deux séries de languettes de collecte de courant, chaque série comprenant au moins deux languettes de collecte de courant, chacune des languettes de collecte de courant s'étendant depuis le bord supérieur dans la première électrode et depuis le bord inférieur dans la deuxième électrode, jusque respectivement un sommet supérieur et un sommet inférieur, sur une hauteur donnée mesurée selon l'axe central, cellule dans laquelle dans une série donnée les languettes de collecte de courant présentent une hauteur sensiblement identique et la hauteur des languettes de collecte de courant est différente d'une série à l'autre, cellule dans laquelle les languettes de collecte de courant d'une série donnée présente une troisième longueur mesurée selon un premier axe sensiblement perpendiculaire à l'axe central et parallèle aux bords supérieurs et inférieurs,
   cellule dans laquelle une première distance de séparation entre deux languettes de collecte de courant d'une série donnée est identique et varie d'une série à l'autre,
   cellule dans laquelle, dans une série donnée, la troisième longueur est comprise entre 50% et 150% de la première distance.

Cela permet d'obtenir avec quasi-certitude que les languettes soient agencées les unes derrière les autres. En effet, cette architecture s'avère être particulièrement difficile à obtenir. Des décalages angulaires entre languettes dans une rangée 20 donnée de languettes apparaissent fréquemment. Ces décalages sont tels qu'il arrive fréquemment que les languettes censées être dans une même rangée 20 ne se chevauchent même plus provoquant un risque de ne plus permettre la connexion électrique entre elles, une fois repliées, ce qui grève les performances de la cellule voire peut nécessiter de l'envoyer au rebus. Avec de telles première distance 22 et troisième longueur 30, il est alors possible d'éviter la présence de tels décalages angulaires dans une rangée 20 donnée. En particulier cela permet d'obtenir avec quasi-certitude un chevauchement d'au moins 50% de la surface de chaque languette avec la ou les languette(s) immédiatement voisine(s) dans une rangée 20 donnée. Ce chevauchement est suffisant pour permettre un contact électrique efficace et éviter la mise au rebus de la cellule.

Diverses caractéristiques supplémentaires peuvent être prévues seules ou en combinaison :
- dans une série donnée, la troisième longueur est comprise entre 80% et 120% de la première distance ;
- dans une série donnée, la première distance est sensiblement égale à la troisième longueur ;
- la hauteur des languettes de collecte de courant diminue selon que l'on se déplace le long de la première électrode et de la deuxième électrode et vers une direction d'enroulement ;
- une fois l'empilement enroulé sur lui-même autour de l'axe central, la cellule comporte plusieurs rangées de languettes de collecte de courant, lesdites rangées s'étendant depuis une périphérie de la cellule vers un centre de ladite cellule situé sur l'axe central ;
- la hauteur des languettes de collecte de courant diminue selon que l'on se déplace depuis la périphérie vers le centre ;
- la première distance diminue d'une série à l'autre selon que l'on se déplace le long de la première d'électrode et de la deuxième d'électrode vers une direction d'enroulement ;
- une deuxième distance séparant deux séries voisines de languettes de collecte de courant et mesurée selon le premier axe évolue selon que l'on se déplace le long de la première d'électrode et de la deuxième d'électrode ;
- la deuxième distance diminue selon que l'on se déplace le long de la première d'électrode et de la deuxième électrode, vers une direction d'enroulement ;
- les languettes de collecte de courant présentent une forme de trapèze isocèle ;
- les languettes de collectes de courant comportent :
   - une première base supérieure confondue avec le bord supérieur de la première d'électrode et une première base inférieure confondue avec le bord inférieur de la deuxième d'électrode,
   - une deuxième base supérieure confondue avec le sommet supérieur de la languette de collecte de courant et une deuxième base inférieure confondue avec le sommet inférieur de la languette de collecte de courant,
   - deux bords latéraux supérieurs reliant la première base supérieure à la deuxième base supérieure et deux bords latéraux inférieurs reliant la première base inférieure et la deuxième base inférieure ;
   - la première base présente une première longueur et la deuxième base présente une deuxième longueur inférieure à la première longueur, la première longueur et la deuxième longueur étant mesurée selon le premier axe ;
   - la première longueur et la deuxième longueur présentent un ratio compris entre 1 et 2 ;
   - les languettes de collecte de courant présentent une forme sensiblement rectangulaire ;
   - d'une série à l'autre, la troisième longueur est différente ;
   - la troisième longueur diminue selon que l'on se déplace vers une direction d'enroulement ;
   - chaque languette de collecte de courant comprend une découpe selon l'axe central, ladite découpe séparant chaque languette de collecte de courant en deux demi-languettes de dimensions sensiblement identiques ;
   - dans la première électrode, la découpe s'étend depuis le bord supérieur jusqu'au sommet supérieur et dans la deuxième électrode, la découpe s'étend depuis le bord inférieur jusqu'au sommet inférieur
   - d'une série donnée à l'autre, une variation de la première distance est sensiblement égale à une variation de la troisième longueur.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig 1] la figure 1 est une représentation schématique d'électrodes selon l'invention,
[Fig 2] la figure 2 est une représentation schématique d'électrodes selon une variante de réalisation,
[Fig 3] la figure 3 est une représentation schématique d'électrodes selon une variante de réalisation,
[Fig 4] la figure 4 est une représentation schématique d'électrodes selon une variante de réalisation,
[Fig 5] la figure 5 est une représentation d'une cellule selon l'invention.

### Description détaillée de l'invention

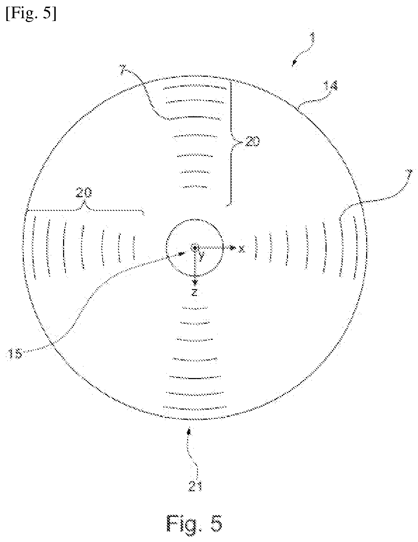

Sur la figure 5 est représentée une cellule 1 de batterie électrique rechargeable, pour véhicule à propulsion électrique. La cellule 1 comprend au moins un empilement successif d'une feuille :
- d'une première électrode 2 positive,
- d'un premier séparateur isolant (non représenté sur les dessins),
- d'une deuxième électrode 3 négative,
- d'un deuxième séparateur isolant (non représenté sur les dessins).

La première électrode 2 comprend un bord 4 supérieur. La deuxième électrode 3 comprend un bord 5 inférieur.

Dans la suite de la description, on adoptera de manière non limitative - et sans référence à la gravité terrestre - des orientations longitudinale, transversale et verticale, indiquées par le trièdre X, Y, Z des figures et dans lesquels :
- l'axe X correspond à un premier axe longitudinal parallèle aux bords supérieur et inférieur,
- l'axe Y, perpendiculaire à l'axe X, correspond à un axe central de la cellule autour duquel celle-ci est enroulée,
- l'axe Z, perpendiculaire à l'axe X et à l'axe Y, correspond à un deuxième axe transversal.

Le trièdre XYZ définit les plans XY, XZ et YZ.

Ainsi que précédemment évoqué, l'empilement est enroulé sur lui-même autour de l'axe Y. L'empilement ainsi enroulé forme un cylindre.

La feuille de première électrode 2 et la feuille de deuxième électrode 3 comprennent chacune au moins deux séries 6 de languettes 7 de collecte de courant. Chaque série 6 comporte au moins deux languettes 7 collecte de courant. Dans le mode de réalisation représenté sur les dessins, la feuille de première électrode 2 comprend trois séries 6 et chaque série 6 comporte quatre languettes 7 de collecte de courant sans que cela ne soit limitatif.

Dans la feuille de première électrode 2, chaque languette 7 de collecte de courant s'étend depuis le bord 4 supérieur jusqu'à un sommet 8 supérieur sur une hauteur donnée. Dans la feuille de deuxième électrode 3, chaque languette 7 de collecte de courant s'étend depuis le bord 5 inférieur jusqu'à un sommet 10 inférieur sur une hauteur 9 donnée. La hauteur 9 est mesurée selon l'axe Y.

Dans une série 6 donnée de languettes 7 de collecte de courant, toutes les languettes 7 de collecte de courant présentent une hauteur 9 identique.

La hauteur 9 des languettes 7 de collecte de courant est en revanche différente d'une série 6 à l'autre. En effet, dans une première série 11, les languettes 7 de collecte de courant présentent une première hauteur 16. Dans une deuxième série 12, les languettes 7 de collectes de courant présentent une deuxième hauteur 17 supérieure à la première hauteur 16. Dans une troisième série 13, les languettes 7 de collectes de courant présentent une troisième hauteur 18 supérieure à la deuxième hauteur 17.

Une fois l'empilement enroulé autour de l'axe Y, les languettes 7 de collecte de courant sont repliées les unes sur les autres. Les languettes 7 de collecte de courant sont repliées depuis une périphérie 14 de la cellule 1 vers un centre 15 de ladite cellule 1.

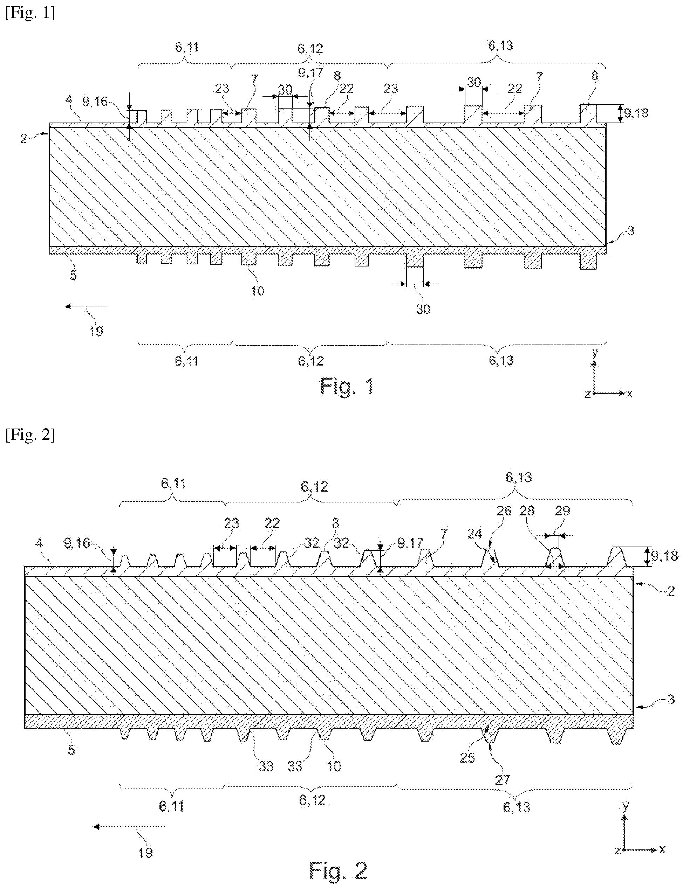

Sur la figure 1, les languettes 7 de collecte de courant d'une série 6 donnée présentent une troisième longueur 30 donnée, mesurée selon l'axe X. Ainsi, dans une série 6 donnée, les languettes 7 de collecte de courant ont une troisième longueur 30 identique.

Une première distance 22 de séparation entre deux languettes 7 de collecte de courant d'une série 6 donnée sont sensiblement identiques. La première distance 22 est mesurée selon l'axe X.

La première distance 22 est différente d'une série à l'autre.

La troisième longueur 30 est comprise entre 50% et 150% de la première distance 22.

Cela permet d'obtenir avec quasi-certitude que les languettes soient agencées les unes derrière les autres. En effet, cette architecture s'avère être particulièrement difficile à obtenir. Des décalages angulaires entre languettes dans une rangée 20 donnée de languettes apparaissent fréquemment. Ces décalages sont tels qu'il arrive fréquemment que les languettes censées être dans une même rangée 20 ne se chevauchent même plus provoquant un risque de ne plus permettre la connexion électrique entre elles, une fois repliées, ce qui grève les performances de la cellule voire peut nécessiter de l'envoyer au rebus. Avec de telles première distance 22 et troisième longueur 30, il est alors possible d'éviter la présence de tels décalages angulaires dans une rangée 20 donnée. En particulier cela permet d'obtenir avec quasi-certitude un chevauchement d'au moins 50% de la surface de chaque languette avec la ou les languette(s) immédiatement voisine(s) dans une rangée 20 donnée. Ce chevauchement est suffisant pour permettre un contact électrique efficace et éviter la mise au rebus de la cellule.

Avantageusement, la troisième longueur 30 est comprise entre 80% et 120% de la première distance 22.

Cela permet d'obtenir avec quasi-certitude un chevauchement d'au moins 50% de la surface de chaque languette avec la ou les languette(s) immédiatement voisine(s) dans une rangée 20 donnée.

Avantageusement, dans une série donnée, la première distance 22 est sensiblement égale à la troisième longueur 30. Avec de telles première distance 22 et troisième longueur 30, il est alors possible d'éviter la présence de tels décalages angulaires dans une rangée 20 donnée. De plus, cela simplifie le procédé de fabrication et permet d'éviter les rebus de production

Avantageusement, la hauteur 9 des languettes 7 de collecte de courant diminue selon que l'on se déplace le long de la première d'électrode 2 et de la deuxième d'électrode 3, vers une direction d'enroulement 19.

Ceci permet de faciliter le pliage des languettes 7 de collecte de courant. En effet, les languettes 7 de collecte de courant de plus petite hauteur 9 sont ainsi situées proche de l'axe Y de la cellule. Au moment du pliage, il devient possible d'éviter qu'un amas de métal ne se forme au voisinage de l'axe Y simplifiant ainsi l'assemblage de la cellule 1.

Avantageusement, et en référence à la figure 5, la cellule 1 comporte plusieurs rangées 20 de languettes 7 de collecte de courant. Les rangées 20 s'étendent depuis la périphérie 14 de la cellule 1 vers un centre 15 de ladite cellule 1, ledit centre 15 étant situé sur l'axe Y.

Avantageusement, la hauteur 9 des languettes 7 de collecte de courant diminue selon que l'on se déplace depuis la périphérie 14 vers le centre 15 de la cellule 1.

Ainsi le pliage des languettes 7 de collecte de courant est facilité et plus propre. En effet, le pliage des languettes 7 de collectes de courant est plus harmonieux. Ainsi, il devient possible d'éviter la formation d'un amas incontrôlé de métal aux extrémités 21 de la cellule 1. Ceci permet de réduire les risques de court-circuit, de fuites d'électrolyte et d'accident.

Avantageusement, la première distance 22 diminue d'une série 6 à l'autre selon que l'on se déplace le long de la première électrode 2 et de la deuxième électrode 3 vers la direction 19 d'enroulement.

Ceci permet d'obtenir un motif désiré, par exemple celui de la figure 5. En effet, il est intéressant que la première distance 22 diffère d'une série 6 à l'autre pour accommoder la position d'une série 6 donnée dans le cylindre.

Avantageusement, une deuxième distance 23 sépare deux séries 6 voisines de languettes 7 de collecte de courant. La deuxième distance 23 est mesurée selon l'axe X. La deuxième distance 23 évolue selon que l'on se déplace le long de la première électrode 2 et de la deuxième électrode 3. Ceci permet d'obtenir un motif désiré, par exemple celui de la figure 2. En effet, il est intéressant que la deuxième distance 23 évolue d'une série 6 à l'autre pour accommoder la position d'une série 6 donnée dans le cylindre.

Avantageusement, la deuxième distance 23 diminue selon que l'on se déplace le long de la première électrode 2 et selon une direction 19 d'enroulement. Ceci permet d'obtenir un motif désiré, par exemple celui de la figure 5. En effet, il est intéressant que la deuxième distance 23 diminue d'une série 6 à l'autre selon la direction 19 d'enroulement pour accommoder la position d'une série 6 donnée dans le cylindre.

Avantageusement et selon un mode de réalisation représenté sur la figure 2, les languettes 7 de collecte présentent une forme de trapèze isocèle.

Une telle forme facilite le pliage des languettes 7 de collecte de courant.

Avantageusement, chaque languette 7 de collecte de courant comporte :
- une première base 24 supérieure confondue avec le bord 4 supérieur de la première électrode 2 et une première base 25 inférieure confondue avec le bord 5 inférieur de la deuxième électrode 3,
- une deuxième base 26 supérieure confondue avec le sommet 8 supérieur de la première électrode 2 et une deuxième base 27 inférieure confondue avec le sommet 10 inférieur de la deuxième électrode 3,
- deux bords latéraux 32 supérieurs reliant la première base 24 supérieure à la deuxième base 26 supérieure et deux bords latéraux 33 inférieurs reliant la première base 25 inférieure à la deuxième base 27 inférieure.

Avantageusement, la première base 24, 25 présente une première longueur 28 mesurée selon l'axe X et la deuxième base 26, 27 présente une deuxième longueur 29 mesurée selon l'axe X. La deuxième longueur 29 est inférieure à la première longueur 28.

Il est ainsi possible d'obtenir une forme de trapèze isocèle.

Avantageusement, la première longueur 28 et la deuxième longueur 29 présentent un ratio compris entre 1 et 2. Le ratio est calculé en divisant la première longueur 28 par la deuxième longueur 29.

Les inventeurs ont déterminé qu'un ratio compris dans cet intervalle est particulièrement avantageux en ce qu'il facilite le pliage des languettes 7 de collecte de courant en évitant la formation d'un amas de métal.

Avantageusement et selon un mode de réalisation représenté sur la figure 1, les languettes 7 de collecte présentent une forme sensiblement rectangulaire.

Avantageusement, d'une série 6 à l'autre, la troisième longueur 30 est différente.

Ceci permet d'obtenir un motif désiré, par exemple celui de la figure 5, ce motif répondant à des considérations techniques.

Avantageusement, la troisième longueur 30 diminue selon que l'on se déplace vers la direction 19 d'enroulement.

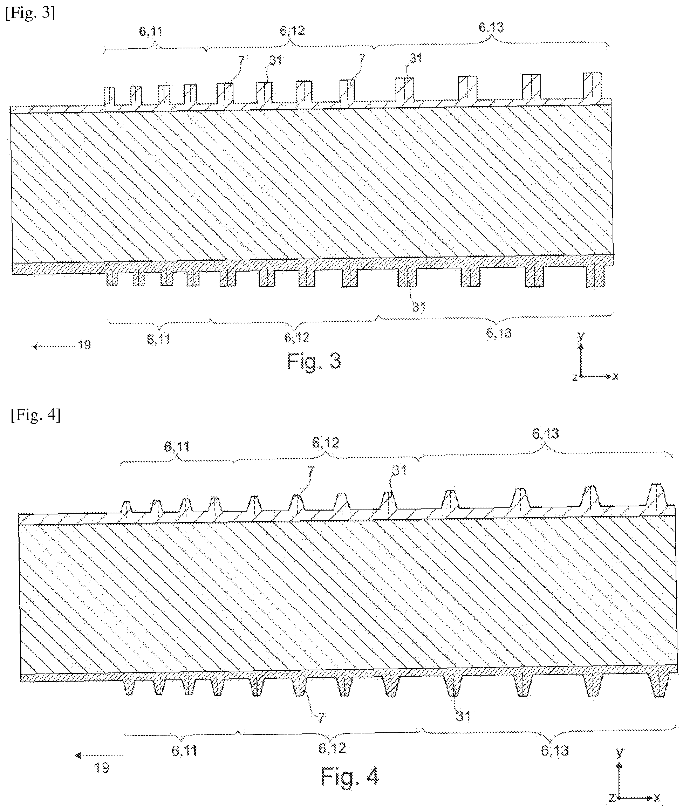

Avantageusement, selon une variante de réalisation représentée sur les figures 3 et 4, chaque languette 7 de collecte de courant comprend une découpe 31 selon l'axe Y. La découpe 31 sépare chaque languette 7 de collecte de courant en deux demi-languette de dimensions sensiblement identiques.

Ceci permet de faciliter le pliage des languettes 7 de collecte de courant, car plier des demi-languettes s'avère être une opération moins complexe.

Avantageusement, dans la première électrode 2 la découpe 31 s'étend depuis le bord 4 supérieur jusqu'au sommet 8 supérieur. Dans la deuxième électrode 3, la découpe 31 s'étend depuis le bord 5 inférieur jusqu'au sommet 10 inférieur.

Ceci permet d'éviter la formation d'un amas métalliques à la base des languettes 7 de courant. Ceci permet aussi d'éviter la formation d'ondulations sur les languettes 7 de collecte de courant lors de l'enroulement des électrodes.

Avantageusement, d'une série 6 donnée à l'autre, une variation de la première distance 22 est sensiblement égale à une variation de la troisième longueur 30. En d'autres termes, et à titre d'exemple, lorsque d'une série à l'autre, la première distance 22 augmente de 1 millimètre, alors la troisième longueur 30 augmente aussi de 1 millimètre.

Avec de telles première distance 22 et troisième longueur 30, il est alors possible d'éviter la présence de décalages angulaires dans une rangée 20 donnée.

## Revendications

1. Cellule (1) de batterie électrique pour véhicule à propulsion électrique, ladite cellule (1) comprenant au moins un empilement successif d'une feuille :
- d'une première électrode (2) positive comprenant un bord (4) supérieur,
- d'un premier séparateur isolant,
- d'une deuxième électrode (3) négative comprenant un bord (5) inférieur,
- d'un deuxième séparateur isolant,
ledit au moins un empilement étant enroulé sur lui-même autour d'un axe (Y) central de sorte à former un cylindre, ladite première électrode (2) et ladite deuxième électrode (3) comprennent chacune au moins deux séries (6) de languettes (7) de collecte de courant, chaque série (6) comprenant au moins deux languettes (7) de collecte de courant, chacune des languettes (7) de collecte de courant s'étendant depuis le bord (4) supérieur dans la première électrode (2) et depuis le bord (5) inférieur dans la deuxième électrode (3), jusque respectivement un sommet (8) supérieur et un sommet (10) inférieur, sur une hauteur (9) donnée mesurée selon l'axe (Y) central, cellule (1) dans laquelle dans une série (6) donnée les languettes (7) de collecte de courant présentent une hauteur (9) sensiblement identique et la hauteur (9) des languettes (7) de collecte de courant est différente d'une série (6) à l'autre, cellule (1) dans laquelle les languettes (7) de collecte de courant d'une série (6) donnée présente une troisième longueur (30) mesurée selon un premier axe (X) sensiblement perpendiculaire à l'axe (Y) central et parallèle aux bords (4,5) supérieurs et inférieurs,
cellule dans laquelle une première distance (22) de séparation entre deux languettes de collecte de courant d'une série (6) donnée est identique et varie d'une série à l'autre,
cellule dans laquelle, dans une série (6) donnée, la troisième longueur (30) est comprise entre 50% et 150% de la première distance (22).

2. Cellule selon la revendication précédente dans laquelle, dans une série (6) donnée, la troisième longueur (30) est comprise entre 80% et 120% de la première distance (22).

3. Cellule (1) selon l'une quelconque des revendications précédentes dans laquelle, dans une série (6) donnée, la première distance (22) est sensiblement égale à la troisième longueur (30).

4. Cellule (1) selon l'une quelconque des revendications précédentes dans laquelle, la hauteur (9) des languettes (7) de collecte de courant diminue selon que l'on se déplace le long de la première électrode (2) et de la deuxième électrode (3) et vers une direction (19) d'enroulement.

5. Cellule (1) selon l'une quelconque des revendications précédentes dans laquelle, une fois l'empilement enroulé sur lui-même autour de l'axe (Y) central, la cellule (1) comporte plusieurs rangées (20) de languettes (7) de collecte de courant, lesdites rangées (20) s'étendant depuis une périphérie (14) de la cellule (1) vers un centre (15) de ladite cellule (1) situé sur l'axe (Y) central.

6. Cellule (1) selon la revendication 5 dans laquelle, la hauteur (9) des languettes (7) de collecte de courant diminue selon que l'on se déplace depuis la périphérie (14) vers le centre (15).

7. Cellule (1) selon l'une quelconque des revendications précédentes dans laquelle, la première distance (22) diminue d'une série (6) à l'autre selon que l'on se déplace le long de la première (2) d'électrode et de la deuxième (3) d'électrode vers une direction (19) d'enroulement.

8. Cellule (1) selon l'une quelconque des revendications précédentes dans laquelle, une deuxième distance (23) séparant deux séries (6) voisines de languettes (7) de collecte de courant et mesurée selon le premier axe (X) évolue selon que l'on se déplace le long de la première d'électrode (2) et de la deuxième d'électrode (3).

9. Cellule (1) selon la revendication 8 dans laquelle, la deuxième distance (23) diminue selon que l'on se déplace le long de la première d'électrode (2) et de la deuxième électrode (3), vers une direction (19) d'enroulement.

10. Cellule (1) selon l'une quelconque des revendications précédentes dans laquelle, les languettes (7) de collecte de courant présentent une forme de trapèze isocèle.

11. Cellule (1) selon la revendication 10 dans laquelle, les languettes (7) de collectes de courant comportent :
- une première base (24) supérieure confondue avec le bord (4) supérieur de la première d'électrode (2) et une première base (25) inférieure confondue avec le bord (5) inférieur de la deuxième d'électrode (3),
- une deuxième base (26) supérieure confondue avec le sommet (8) supérieur de la languette (7) de collecte de courant et une deuxième base (27) inférieure confondue avec le sommet (10) inférieur de la languette (7) de collecte de courant,
- deux bords latéraux (32) supérieurs reliant la première base (24) supérieure à la deuxième base (26) supérieure et deux bords latéraux (33) inférieurs reliant la première base (25) inférieure et la deuxième base (27) inférieure.

12. Cellule (1) selon la revendication 11 dans laquelle la première base (24,25) présente une première longueur (28) et la deuxième base (26,27) présente une deuxième longueur (29) inférieure à la première longueur (28), la première longueur (28) et la deuxième longueur (29) étant mesurée selon le premier axe (X).

13. Cellule (1) selon la revendication 12 dans laquelle, la première longueur (28) et la deuxième longueur (29) présentent un ratio compris entre 1 et 2.

14. Cellule (1) selon l'une quelconque des revendications précédentes dans laquelle, les languettes (7) de collecte de courant présentent une forme sensiblement rectangulaire.

15. Cellule (1) selon l'une quelconque des revendications précédentes dans laquelle, d'une série (6) à l'autre, la troisième longueur (30) est différente.

## Patentansprüche

1. Elektrobatteriezelle (1) für ein Fahrzeug mit Elektroantrieb, die Zelle (1) umfassend mindestens eine Aufeinanderstapelung einer Folie:
- aus einer ersten positiven Elektrode (2), umfassend eine Oberkante (4),
- aus einem ersten isolierenden Separator,
- aus einer zweiten negativen Elektrode (3), umfassend eine Unterkante (5),
- aus einem zweiten isolierenden Separator,
wobei die mindestens eine Stapelung um eine Mittelachse (Y) herum um sich selbst gewickelt ist, um einen Zylinder auszubilden, wobei die erste Elektrode (2) und die zweite Elektrode (3) jeweils mindestens zwei Reihen (6) von Stromsammellaschen (7) umfassen, jede Reihe (6) umfassend mindestens zwei Stromsammellaschen (7), wobei sich jede der Stromsammellaschen (7) von der Oberkante (4) in der ersten Elektrode (2) und von der Unterkante (5) in der zweiten Elektrode (3) bis zu einem oberen Scheitelpunkt (8) beziehungsweise einem unteren Scheitelpunkt (10) auf einer gegebenen Höhe (9) erstreckt, die entlang der Mittelachse (Y) gemessen wird, wobei in der Zelle (1) in einer gegebenen Reihe (6) die Stromsammellaschen (7) eine im Wesentlichen identische Höhe (9) aufweisen und die Höhe (9) der Stromsammellaschen (7) von einer Reihe (6) zu der anderen unterschiedlich ist, wobei in der Zelle (1) die Stromsammellaschen (7) einer gegebenen Reihe (6) eine dritte Länge (30) aufweisen, die entlang einer ersten Achse (X) gemessen wird, die im Wesentlichen senkrecht zu der Mittelachse (Y) und parallel zu der Ober- und der Unterkante (4, 5) ist,
wobei in der Zelle ein erster Trennungsabstand (22) zwischen zwei Stromsammellaschen einer gegebenen Reihe (6) identisch ist und von einer Reihe zu der anderen variiert,
wobei in der Zelle in einer gegebenen Reihe (6) die dritte Länge (30) zwischen 50 % und 150 % des ersten Abstands (22) beträgt.

2. Zelle nach dem vorstehenden Anspruch, wobei in einer gegebenen Reihe (6) die dritte Länge (30) zwischen 80 % und 120 % des ersten Abstands (22) liegt.

3. Zelle (1) nach einem der vorstehenden Ansprüche, wobei in einer gegebenen Reihe (6) der erste Abstand (22) im Wesentlichen gleich der dritten Länge (30) ist.

4. Zelle (1) nach einem der vorstehenden Ansprüche, wobei die Höhe (9) der Stromsammellaschen (7) abnimmt, wenn man sich entlang der ersten Elektrode (2) und der zweiten Elektrode (3) und in Richtung einer Wicklungsrichtung (19) bewegt.

5. Zelle (1) nach einem der vorstehenden Ansprüche, wobei, nachdem die Stapelung um die Mittelachse (Y) herum um sich selbst gewickelt ist, die Zelle (1) mehrere Zeilen (20) von Stromsammellaschen (7) vorweist, wobei sich die Zeilen (20) von einem Rand (14) der Zelle (1) in Richtung einer Mitte (15) der Zelle (1) erstrecken, die auf der Mittelachse (Y) gelegen ist.

6. Zelle (1) nach Anspruch 5, wobei die Höhe (9) der Stromsammellaschen (7) abnimmt, wenn man sich von dem Rand (14) in Richtung der Mitte (15) bewegt.

7. Zelle (1) nach einem der vorstehenden Ansprüche, wobei der erste Abstand (22) von einer Reihe (6) zu der anderen abnimmt, wenn man sich entlang der ersten (2) Elektrode und der zweiten (3) Elektrode in Richtung einer Wicklungsrichtung (19) bewegt.

8. Zelle (1) nach einem der vorstehenden Ansprüche, wobei sich ein zweiter Abstand (23), der zwei benachbarte Reihen (6) von Stromsammellaschen (7) trennt und entlang der ersten Achse (X) gemessen wird, ändert, wenn man sich entlang der ersten Elektrode (2) und der zweiten Elektrode (3) bewegt.

9. Zelle (1) nach Anspruch 8, wobei der zweite Abstand (23) abnimmt, wenn man sich entlang der ersten Elektrode (2) und der zweiten Elektrode (3) in Richtung einer Wicklungsrichtung (19) bewegt.

10. Zelle (1) nach einem der vorstehenden Ansprüche, wobei die Stromsammellaschen (7) eine Form eines gleichschenkligen Trapezes aufweisen.

11. Zelle (1) nach Anspruch 10, wobei die Stromsammellaschen (7) vorweisen:
- eine erste obere Basis (24), die in die Oberkante (4) der ersten Elektrode (2) übergeht, und eine erste untere Basis (25), die in die Unterkante (5) der zweiten Elektrode (3) übergeht,
- eine zweite obere Basis (26), die in den oberen Scheitelpunkt (8) der Stromsammellasche (7) übergeht, und eine zweite untere Basis (27), die in den unteren Scheitelpunkt (10) der Stromsammellasche (7) übergeht,
- zwei obere Seitenkanten (32), die die erste obere Basis (24) mit der zweiten oberen Basis (26) verbinden, und zwei untere Seitenkanten (33), die die erste untere Basis (25) und die zweite untere Basis (27) verbinden.

12. Zelle (1) nach Anspruch 11, wobei die erste Basis (24, 25) eine erste Länge (28) aufweist und die zweite Basis (26, 27) eine zweite Länge (29) aufweist, die kleiner als die erste Länge (28) ist, wobei die erste Länge (28) und die zweite Länge (29) entlang der ersten Achse (X) gemessen werden.

13. Zelle (1) nach Anspruch 12, wobei die erste Länge (28) und die zweite Länge (29) ein Verhältnis zwischen 1 und 2 aufweisen.

14. Zelle (1) nach einem der vorstehenden Ansprüche, wobei die Stromsammellaschen (7) eine im Wesentlichen rechteckige Form aufweisen.

15. Zelle (1) nach einem der vorstehenden Ansprüche, wobei die dritte Länge (30) von einer Reihe (6) zu der anderen unterschiedlich ist.

## Claims

1. Electric battery cell (1) for an electrically propelled vehicle, said cell (1) comprising at least one consecutive stack of a sheet:
- of a first positive electrode (2) comprising an upper edge (4),
- of a first insulating separator,
- of a second negative electrode (3) comprising a lower edge (5),
- of a second insulating separator,
said at least one stack being wound around itself about a central axis (Y) so as to form a cylinder, said first electrode (2) and said second electrode (3) each comprise at least two series (6) of current collection tabs (7), each series (6) comprising at least two current collection tabs (7), each of the current collection tabs (7) extending from the upper edge (4) in the first electrode (2) and from the lower edge (5) in the second electrode (3), to an upper apex (8) and a lower apex (10) respectively, over a given height (9) measured along the central axis (Y), in which cell (1) in a given series (6) the current collection tabs (7) have a substantially identical height (9) and the height (9) of the current collection tabs (7) is different from one series (6) to another, cell (1) wherein the current collection tabs (7) of a given series (6) have a third length (30) measured along a first axis (X) substantially perpendicular to the central axis (Y) and parallel to the upper and lower edges (4, 5),
cell wherein a first separation distance (22) between two current collection tabs of a given series (6) is identical and varies from one series to another,
cell wherein, in a given series (6), the third length (30) is between 50% and 150% of the first distance (22).

2. Cell according to the preceding claim, wherein, in a given series (6), the third length (30) is between 80% and 120%
of the first distance (22).

3. Cell (1) according to any one of the preceding claims, wherein, in a given series (6), the first distance (22) is substantially equal to the third length (30).

4. Cell (1) according to any one of the preceding claims, wherein the height (9) of the current collection tabs (7) decreases when moving along the first electrode (2) and the second electrode (3) and in a winding direction (19).

5. Cell (1) according to any one of the preceding claims, wherein, once the stack is wound around itself about the central axis (Y), the cell (1) comprises a plurality of rows (20) of current collection tabs (7), said rows (20) extending from a periphery (14) of the cell (1) toward a center (15) of said cell (1) located on the central axis (Y).

6. Cell (1) according to claim 5, wherein the height (9) of the current collection tabs (7) decreases when moving from the periphery (14) toward the center (15).

7. Cell (1) according to any one of the preceding claims, wherein the first distance (22) decreases from one series (6) to another when moving along the first electrode (2) and the second electrode (3) in a winding direction (19).

8. Cell (1) according to any one of the preceding claims, wherein a second distance (23) separating two adjacent series (6) of current collection tabs (7) and measured along the first axis (X) varies when moving along the first electrode (2) and the second electrode (3).

9. Cell (1) according to claim 8, wherein the second distance (23) decreases when moving along the first electrode (2) and the second electrode (3), in a winding direction (19).

10. Cell (1) according to any one of the preceding claims, wherein the current collection tabs (7) have an isosceles trapezoidal shape.

11. Cell (1) according to claim 10, wherein the current collection tabs (7) comprise:
- a first upper base (24) coinciding with the upper edge (4) of the first electrode (2) and a first lower base (25) coinciding with the lower edge (5) of the second electrode (3),
- a second upper base (26) coinciding with the upper apex (8) of the current collection tab (7) and a second lower base (27) coinciding with the lower apex (10) of the current collection tab (7),
- two upper side edges (32) connecting the first upper base (24) to the second upper base (26) and two lower side edges (33) connecting the first lower base (25) to the second lower base (27).

12. Cell (1) according to claim 11, wherein the first base (24, 25) has a first length (28) and the second base (26, 27) has a second length (29) less than the first length (28), the first length (28) and the second length (29) being measured along the first axis (X).

13. Cell (1) according to claim 12, wherein the first length (28) and the second length (29) have a ratio of between 1 and 2.

14. Cell (1) according to any one of the preceding claims, wherein the current collection tabs (7) have a substantially rectangular shape.

15. Cell (1) according to any one of the preceding claims, wherein, from one series (6) to another, the third length (30) is different.
